(19) **Europäisches Patentamt / European Patent Office / Office européen des brevets**

(11) **EP 3 198 240 B1**

(12) **FASCICULE DE BREVET EUROPEEN**

(45) Date de publication et mention
de la délivrance du brevet:
**29.04.2020 Bulletin 2020/18**

(21) Numéro de dépôt: **14793222.2**

(22) Date de dépôt: **25.09.2014**

(51) Int Cl.:
*E21B 47/10* (2012.01)     *E21B 43/00* (2006.01)
*G01F 1/74* (2006.01)     *G01F 15/08* (2006.01)
*C10G 1/00* (2006.01)

(86) Numéro de dépôt international:
**PCT/FR2014/052418**

(87) Numéro de publication internationale:
**WO 2016/046455 (31.03.2016 Gazette 2016/13)**

(54) **PRODUCTION D'HYDROCARBURES AVEC SÉPARATEUR DE TEST**

ÖL-PRODUKTION MIT ÖLABSCHEIDER

OIL PRODUCTION WITH SEPARATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**02.08.2017 Bulletin 2017/31**

(73) Titulaire: **Total SA
92400 Courbevoie (FR)**

(72) Inventeurs:
• **COUDROY, Cécile
F-64300 Orthez (FR)**
• **COUPUT, Jean Paul
F-64018 Pau (FR)**
• **CAULIER, Renaud
F-64018 Pau (FR)**
• **KESSLER, Nicolas
F-92400 Courbevoie (FR)**

(74) Mandataire: **Bandpay & Greuter
30, rue Notre-Dame des Victoires
75002 Paris (FR)**

(56) Documents cités:
WO-A1-2006/048418     WO-A1-2007/116008
US-B1- 6 561 041

**Description**

La présente invention concerne le domaine de la production d'hydrocarbures, et plus précisément un procédé de production sur une ligne de production comprenant au moins deux puits de production.

Les installations de production d'hydrocarbures comprennent des lignes dans lesquelles circulent des fluides, notamment des lignes de production comprenant un puits de production et dans lesquelles circulent des hydrocarbures depuis un réservoir d'hydrocarbures vers une tête de puits. Il est aujourd'hui courant de chercher à fournir une estimation du débit du fluide circulant dans de telles lignes de production. En effet, l'estimation du débit fournie permet de manière connue une meilleure gestion de la ligne. On obtient ainsi un meilleur contrôle ou une meilleure connaissance de la production globale de l'installation, grâce à l'estimation potentiellement fournie pour chaque ligne, typiquement ligne par ligne.

Une approche consiste à rechercher une estimation du débit du fluide par le biais d'un dispositif et en fonction de données respectives au dispositif, grâce à un modèle thermodynamique prévu à cet effet, le dispositif (intégré à la ligne) et les données respectives n'étant initialement pas prévus pour cela. On obtient alors un compteur « virtuel ». Dans ce cadre, certaines solutions utilisent plusieurs modèles de la sorte, basés sur des données respectives à des dispositifs différents, et chaque modèle donne théoriquement une estimation différente du débit pour des conditions de production (e.g. fractions gaz/huile/eau) données équivalentes. Typiquement, au maximum deux ou trois modèles sont choisis et les données relatives aux conditions de production (fraction eau/huile/gaz) sont corrigées afin que les estimations de débits soient similaires. Cette approche n'est pas entièrement satisfaisante, en ce sens que l'estimation du débit fournie n'est pas suffisamment proche du débit réel.

Une autre approche consiste à utiliser un compteur métrique disposé dans la ligne dont on veut connaître le débit. Les compteurs métriques sont des dispositifs adaptés à effectuer une mesure sur le fluide circulant dans la ligne, et à fournir directement une estimation du débit du fluide dans la ligne en fonction (au moins) de la mesure. Les compteurs métriques connus utilisent également la valeur d'au moins un paramètre, appelé communément « paramètre de calibration ». Un compteur métrique peut notamment effectuer pour cela une ou plusieurs mesures physiques (e.g. électriques, nucléaires, et/ou optiques, par exemple des mesures de permittivité, de conductivité, et/ou d'atténuation gamma). Un tel compteur métrique peut pour des raisons diverses fournir une estimation qui n'est pas entièrement satisfaisante. Par exemple, il est nécessaire qu'une valeur la plus correcte possible soit attribuée aux paramètres de calibration, faute de quoi l'estimation du débit du fluide dans la ligne fournie par le compteur métrique serait trop éloignée de la réalité et par conséquent inexploitable. Cela est d'autant plus vrai lorsque l'on considère des compteurs de gaz torché ou des compteurs fiscaux pour lesquels il est particulièrement critique qu'une estimation proche de la réalité soit réalisée. Or, le paramètre de calibration peut souvent être erroné, par exemple à cause d'une dérive des capteurs.

Une autre approche encore consiste à utiliser un séparateur de test pour « tester » une ligne de production, c'est-à-dire mesurer ponctuellement le débit d'un fluide dans une ligne de production. Cependant, les séparateurs de test peuvent eux aussi fournir des résultats inexacts, bien qu'ils soient relativement précis. Par ailleurs, pour des raisons opérationnelles et économiques (limitations des manques à produire), on teste généralement plusieurs puits en même temps (par exemple trois à quatre puits). On obtient ainsi des informations sur les débits huile, eau et gaz par riser testé mais pas par puits testé. Il existe des moyens pour recouper cette information avec une information de débit par puits, mais ces moyens ne permettent à l'heure actuelle que d'aboutir à une estimation encore relativement éloignée de la réalité. Les publications suivantes forment un exemple de telles approches WO 2007/116008, WO 2006/048418 et US 6,561,041 B1.

Le but de la présente invention est de fournir une solution simple à mettre en œuvre pour estimer le débit d'un fluide dans chaque puits d'une ligne de production d'hydrocarbures, lors de la production, de la manière la plus correcte possible.

A cette fin, la présente invention propose un procédé de production d'hydrocarbures sur une ligne de production comprenant au moins deux puits de production, chaque puits de production comprenant au moins un dispositif adapté à fournir une estimation du débit d'un fluide dans le puits en fonction de données respectives, les puits étant reliés à un séparateur de test adapté à fournir une estimation du débit cumulé du fluide pour l'ensemble des puits en fonction de données respectives. Le procédé comprend, pendant la production la détermination des données respectives à la fourniture d'une estimation du débit par le dispositif de chaque puits ; la détermination des données respectives à la fourniture d'une estimation du débit cumulé par le séparateur de test ; et un processus de réconciliation et validation de données impliquant les données déterminées, la réconciliation étant conditionnée par une égalité au moins substantielle entre la somme des estimations du débit du fluide à fournir par le dispositif de chaque puits et l'estimation du débit cumulé à fournir par le séparateur de test.

L'invention propose également un programme d'ordinateur, adapté à être enregistré sur une mémoire d'enregistrement de données, comprenant des instructions pour exécuter le procédé.

L'invention propose également un système adapté à communiquer avec des dispositifs compris dans au moins deux puits de production d'une ligne de production d'hydrocarbures, les dispositifs étant adaptés à fournir une estimation du débit d'un fluide dans le puits en fonction de données respectives, et avec un séparateur de test relié aux puits et adapté à fournir une estimation du débit cumulé du fluide pour l'ensemble des puits en fonction de données respectives, le système comprenant une mémoire ayant enregistré le programme .

L'invention propose également une installation de production d'hydrocarbures, comprenant une ligne de production comprenant au moins deux puits de production, chaque puits de production comprenant au moins un dispositif adapté à fournir une estimation du débit d'un fluide dans le puits en fonction de données respectives, les puits étant reliés à un séparateur de test adapté à fournir une estimation du débit cumulé du fluide pour l'ensemble des puits en fonction de données respectives, et le système, le système étant adapté à communiquer avec les dispositifs et le séparateur de test de la ligne de production.

Suivant des modes de réalisation préférés, l'invention comprend une ou plusieurs des caractéristiques suivantes :

les données respectives à la fourniture d'une estimation du débit cumulé par le séparateur de test comprennent au moins une mesure réalisée par un capteur du séparateur de test ;

- le séparateur de test comprend au moins un compteur métrique, le capteur réalisant la mesure étant un capteur du compteur métrique ;
- le séparateur de test comprend plusieurs compteurs métriques monophasiques adaptés chacun à fournir une estimation du débit d'une phase respective du fluide en fonction d'une mesure réalisé par un capteur respectif ;
- le fluide comprend une phase eau, une phase gaz et une phase huile ;
- au moins un puits de production comprend un compteur métrique adapté à fournir une estimation du débit du fluide dans le puits en fonction de données respectives incluant une mesure réalisée par au moins un capteur du compteur métrique sur le fluide ;
- un puits de production comprenant un compteur métrique comprend en outre au moins un autre dispositif adapté à fournir une estimation du débit du fluide dans le puits en fonction de données respectives qui sont déterminées et impliquées dans le processus de réconciliation et validation de données ;
- l'autre dispositif est une duse, un dispositif associé à un module d'afflux, et/ou une conduite ;
- le processus de réconciliation et validation de données minimise une fonction de coût pénalisant, pour chaque donnée réconciliée, la différence entre sa valeur avant réconciliation et sa valeur réconciliée ;
- la différence est pondérée dans la fonction de coût par une incertitude relative à ladite donnée réconciliée ;
- le procédé comprend en outre une détection de toute donnée réconciliée pour laquelle la différence entre sa valeur avant réconciliation et sa valeur réconciliée est supérieure à un seuil dépendant de l'incertitude relative à la donnée réconciliée ;
- le procédé comprend la réitération du processus de réconciliation et validation de données en ôtant la donnée réconciliée ayant le plus de poids dans la valeur de la fonction de coût, tant que la valeur de la fonction de coût est supérieure à un seuil prédéterminé ;
- le procédé comprend en outre la fourniture de la valeur réconciliée du débit de fluide dans chaque puits ;
- le procédé comprend en outre la fourniture d'une incertitude relative à la valeur réconciliée du débit de fluide dans chaque puits fonction de la différence entre sa valeur avant réconciliation et sa valeur réconciliée ;
- la mesure réalisée par un capteur de compteur métrique sur le fluide est une mesure électrique, nucléaire et/ou optique ;
- la duse est adaptée à fournir une estimation du débit du fluide en fonction d'une ouverture de vanne et d'une mesure réalisé par au moins un capteur sur le fluide fournissant les pertes de charge associées à l'ouverture de vanne ;
- le dispositif associé au module d'afflux est adapté à fournir une estimation du débit du fluide en fonction d'une mesure de pression réalisé par au moins un capteur sur le fluide et de propriétés physico-chimiques du fluide ; et/ou
- la conduite est adaptée à fournir une estimation du débit du fluide en fonction de propriétés géométrique et/ou mécaniques de la conduite et d'une mesure réalisé par au moins un capteur sur le fluide fournissant les pertes de charge et/ou de température associées aux propriétés géométrique et/ou mécaniques de la conduite.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente un schéma du procédé.
Les figures 2 et 3 illustrent le fonctionnement d'un exemple de compteur métrique.
La figure 4 représente un schéma d'un exemple d'une installation de production d'hydrocarbures.
La figure 5 représente un exemple de puits de production.

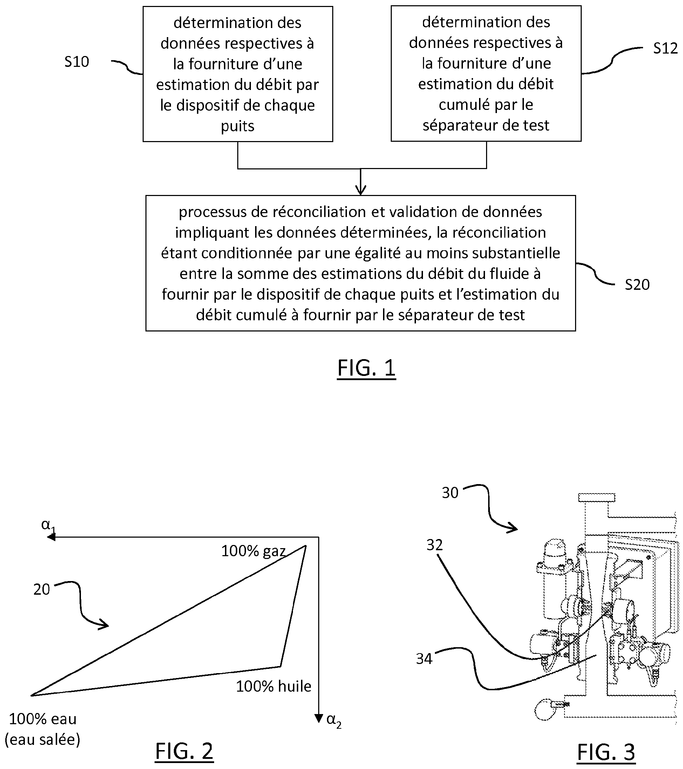

La figure 1 montre le procédé de production d'hydrocarbures. Le procédé de production d'hydrocarbures est mis en œuvre sur une ligne de production comprenant au moins deux puits de production. Ainsi, un fluide (i.e. l'hydrocarbure produit) circule dans chaque puits, potentiellement à un débit différent. Chaque puits de production comprend au moins un dispositif adapté à fournir une estimation du débit du fluide dans le puits en fonction de données respectives (à chaque dispositif). Les puits sont par ailleurs reliés à un séparateur de test adapté à fournir une estimation du débit cumulé du fluide pour l'ensemble des puits en fonction de données respectives (au séparateur de test). Le procédé comprend, pendant la production, la détermination S10 des données respectives à la fourniture d'une estimation du débit par le dispositif de chaque puits. Le procédé comprend également la détermination S12 des données respectives à la fourniture d'une estimation du débit cumulé par le séparateur de test. Et le procédé comprend enfin un processus S20 de réconciliation et validation de données (DVR) impliquant les données déterminées. La réconciliation est conditionnée par une égalité au moins substantielle entre la somme des estimations du débit du fluide à fournir par le dispositif de chaque puits et l'estimation du débit cumulé à fournir par le séparateur de test. Le procédé de la figure 1 permet une estimation du débit du fluide dans chaque puits de la ligne simple à mettre en œuvre et relativement correcte (i.e. relativement proche de la valeur réelle du débit).

En effet, le procédé s'inscrit dans le contexte où chaque puits intègre au moins un dispositif adapté à fournir le débit du fluide circulant dans le puits. On a ainsi déjà une estimation du débit par puits. Par ailleurs, le procédé prévoit également un séparateur de test adapté à fournir une estimation du débit cumulé, c'est-à-dire pour l'ensemble des puits reliés au séparateur de test. Cela permet ainsi une redondance d'information, à moindre coût opérationnel, étant donné que plusieurs puits sont reliés au séparateur de test. Typiquement, un nombre supérieur ou égal à trois puits, et/ou inférieur ou égal à dix puits, ou encore cinq puits, par exemple trois ou quatre puits, sont reliés au séparateur de test. Cette redondance d'information permet d'améliorer la première information fournie pour chaque puits, d'autant plus qu'un séparateur de test fournit une estimation relativement précise. Toutefois, le procédé va plus loin car il met en œuvre un processus de DVR qui remet en question non seulement les estimations de chaque puits, mais également l'estimation fournie par le séparateur de test, contrairement à une approche classique où l'on fait entièrement confiance à cette dernière estimation. Par ailleurs, le processus de DVR impliquant les données respectives à la fourniture d'une estimation du débit par chaque dispositif, y compris le séparateur de test (et non pas seulement les estimations fournies *in fine*), ces données sont directement remises en question, ce qui permet d'obtenir une meilleure estimation.

Notamment, ces données peuvent comprendre des mesures dont la remise en question améliore l'estimation.

Par exemple, les données respectives à la fourniture d'une estimation du débit cumulé par le séparateur de test et déterminées en S12 peuvent comprendre au moins une mesure réalisée par un capteur du séparateur de test. En effet, un séparateur de test est, de manière connue de l'homme du métier, un dispositif comprenant une chambre avec une entrée pour l'admission d'un fluide (éventuellement provenant de plusieurs puits) dans la chambre, des moyens pour séparer les différentes phases (e.g. eau, huile et gaz) du fluide (par exemple un volume d'amission suffisant de la chambre et une géométrie pour opérer une décantation naturelle du fluide), des sorties agencées en fonction de la géométrie de la chambre pour permettre d'évacuer hors de la chambre chacune des différentes phases du fluide séparément, et des outils permettant de déterminer le débit de chaque phase. Ces outils comprennent généralement un capteur permettant de déterminer le débit de sortie de chaque phase. Cela peut être le capteur d'un débitmètre, ou de manière plus générique d'un compteur métrique. Ainsi, le séparateur de test peut comprendre plusieurs compteurs métriques monophasiques adaptés chacun à fournir une estimation du débit d'une phase respective du fluide en fonction d'une mesure réalisée par un capteur respectif. Les compteurs métriques du séparateur peuvent de manière classique consister en toute combinaison de compteurs massiques, auquel cas le capteur peut être un capteur de Coriolis, de compteurs déprimogènes, incluant alors une plaque à orifice, ou encore de compteurs ultrasoniques. Ainsi, les mesures brutes réalisées par les capteurs de tout type de compteur métrique du séparateur de test sont elles aussi remises en question dans le processus S20 de DVR, contrairement à une approche naïve où les valeurs de débit fournies par le séparateur de test seraient les données intégrées au processus de DVR.

Par ailleurs, au moins un puits de production peut comprendre lui aussi un compteur métrique. Dans ce cas, le compteur métrique d'un puits est adapté à fournir une estimation du débit du fluide dans le puits en fonction de données respectives déterminées en S10. Ces données incluent une mesure réalisée par au moins un capteur du compteur métrique sur le fluide. En outre, tout puits peut comprendre au moins un autre dispositif qu'un compteur métrique adapté à fournir lui aussi une estimation du débit du fluide dans le puits en fonction de données respectives, ces données (qui peuvent elles aussi comprendre des mesures) pouvant alors elles aussi être déterminées et impliquées dans le processus de réconciliation et validation de données. On peut pour cela ajouter simplement une condition au processus de DVR, à savoir une condition d'égalité au moins substantielle entre les différentes estimations de débit fournies pour un même puits. Comme dans le cas du séparateur de test, remettre en question la mesure du compteur métrique déterminée en S10 dans le processus S20 de DVR plutôt que naïvement l'estimation fournie par le compteur métrique améliore le résultat.

Il est à noter que si un puits possède plusieurs dispositifs adaptés chacun à fournir le débit dans le puits, dont par exemple un compteur métrique, on a alors une deuxième couche de redondance (en plus de celle offerte par le séparateur de test), ce qui améliore l'estimation du débit fournie pour le puits à l'issue de la réconciliation. Par ailleurs, le procédé peut être répété à différents instants, les données déterminées en S10 et S12 pour chaque instant étant alors potentiellement réconciliées au sein d'une unique réconciliation globale. Cela permet d'utiliser de la redondance temporelle pour améliorer l'estimation, si notamment l'on insère des contraintes temporelles au processus S20 de DVR. Enfin, l'expression « compteur métrique », comprise de l'homme du métier, désigne les dispositifs mentionnés plus haut. Tout compteur métrique utilisé par le procédé, y compris un compteur métrique du séparateur de test, peut donc notamment effectuer, pour fournir une estimation de débit, une ou plusieurs mesures physiques sur le fluide (e.g. électriques, nucléaires, et/ou optiques, par exemple des mesures de permittivité, de conductivité, et/ou d'atténuation gamma), et le compteur peut utiliser des valeurs prédéterminées de paramètres de calibration et/ou des hypothèses fluides prédéterminées.

La DVR réalisée par le procédé peut être mise en œuvre au sein d'un procédé plus global de production d'hydrocarbures amélioré, ladite production étant réalisée par l'installation de production d'hydrocarbures intégrant la ligne. Le procédé peut par exemple comprendre la fourniture, par exemple à une centrale de données, de la valeur réconciliée du débit de fluide dans chaque puits, et possiblement aussi de la valeur réconciliée du débit cumulé, c'est-à-dire une valeur correspondant aux estimations du débit fournies par les différents dispositifs et par le séparateur de test une fois leurs données respectives réconciliées, sachant que la somme des estimations du débit fournies pour chaque puits est au moins substantiellement égale à l'estimation du débit cumulé de par la définition même du processus de réconciliation. Cela permet une étude de la production par des spécialistes à qui l'on fournirait les valeurs réconciliées. Le procédé peut également comprendre la fourniture d'une incertitude relative à chaque valeur réconciliée de débit de fluide. L'incertitude peut être fonction de la différence entre la valeur avant réconciliation du débit et la valeur réconciliée du débit. La valeur avant réconciliation peut être la valeur fournie, par exemple par un compteur métrique ou un autre dispositif sur la base des seules données déterminées en S10 ou S12, sans tenir compte de la réconciliation (cette estimation sans réconciliation, donc relativement erronée, peut être calculée en parallèle de la valeur réconciliée issue du processus de DVR). Ainsi, le procédé peut fournir une incertitude par dispositif fournissant une estimation respective, en fonction de la différence entre la valeur avant réconciliation fournie par le dispositif et la valeur réconciliée. Cela permet de détecter les dispositifs fournissant les estimations les moins correctes, par exemple avec des comparaisons classiques entre les différentes valeurs fournies. Ainsi, le procédé de la figure 1 permet une meilleure gestion de la ligne, de l'installation, et donc de la production.

Comme expliqué plus haut, l'estimation du débit dans un puits de production d'une installation de production d'hydrocarbures grâce notamment à l'intégration d'un compteur métrique au puits permet une meilleure gestion de la ligne de production, avec un meilleur contrôle ou une meilleure connaissance de la production globale de l'installation, e.g. en temps réel et/ou ligne par ligne. Le procédé de la figure 1 permet alors d'améliorer les estimations fournies pour chaque ligne sur laquelle il est mis en œuvre, ce qui améliore la gestion globale de la production. Ainsi, le procédé peut être mis en œuvre pendant la production sur plusieurs lignes regroupant chacune plusieurs puits, les étapes S10, S12 et S20 étant exécutées pour chaque ligne indépendamment des autres lignes. Les estimations de débit fournies pour chaque puits de chaque ligne suite à la réconciliation peuvent alors être centralisées pour gérer la production.

Grâce au séparateur de test, le procédé permet en tous les cas de déterminer des débits (huile, eau et gaz) par puits précis. En outre, dans un exemple le procédé permet de valider et potentiellement de calibrer des compteurs multiphasiques situés sur chaque puits. Le procédé peut également permettre de caler des paramètres de modèles d'estimation de débits qui seront détaillés plus tard (par exemple équation choke, ou modèle de pertes de charge dans le tubing du puits, ou courbes de pompe). Le procédé peut également permettre d'identifier des capteurs défaillants et/ou de fournir des valeurs de remplacement fiables dans le cas où les compteurs multiphasiques seraient erronés. Le procédé ne connaît relativement pas les limites habituelles, comme par exemple une éventuelle nécessité de faire des opérations sur le puits, une éventuelle influence des compositions mélangées puisque plusieurs puits sont testés simultanément, une éventuelle précision de méthode qui ne tient pas compte dans le calcul de son coefficient des incertitudes au niveau des mesures de référence, un éventuel temps de résidence des fluides (car lorsque la production d'un seul puits varie, il faut prendre en compte le fait que la variation générée ne sera effective qu'au bout d'un certain temps), une éventuelle atténuation de la variation générée due à la production des autres fluides et des régimes d'écoulement, et d'un éventuel transitoire généré par les variations de production du puits. La solution présentée considère dans un exemple toutes les mesures, tous les modèles et tous les paramètres du puits et de la référence de test (e.g. un séparateur de test au niveau du traitement surface) et prend en compte leurs incertitudes respectives afin de fournir un débit huile, eau et gaz par puits testé ainsi que leurs incertitudes respectives. De par l'utilisation de la redondance temporelle (possible) elle permet également d'identifier les capteurs défaillants, de fiabiliser les mesures des compteurs multiphasiques et de trouver le bon paramétrage des modèles d'estimation de débits sur les puits.

Le fluide dont on estime le débit peut être monophasique, et dans ce cas une estimation du débit du fluide dans la ligne consiste à simplement fournir une valeur pour le débit de la seule phase du fluide. C'est typiquement le cas pour les estimations faites par le séparateur de test, comme expliqué précédemment, car le fluide initialement multiphasique est séparé en ses différentes phases, constituant alors chacune un fluide monophasique. Un compteur peut effectuer cette estimation sur la base de n'importe quel modèle utilisant une mesure réalisée sur le fluide par au moins un capteur du compteur. Le modèle peut impliquer en outre la valeur d'au moins un paramètre de calibration qui correspond à la mesure du capteur sous une condition prédéterminée d'écoulement du fluide (par exemple un débit ou une vitesse d'écoulement prédéterminés).

Alternativement, le fluide dont on estime le débit peut être multiphasique. C'est typiquement le cas dans un puits de production, car les hydrocarbures produits comprennent habituellement une phase eau, une phase gaz et une phase huile. Dans ce cas, l'estimation du débit du fluide dans la ligne peut consister à fournir les informations permettant de déterminer le débit de chaque phase. Ces informations peuvent comprendre directement une estimation du débit de chaque phase, et/ou une estimation de la fraction (e.g. instantanée) de chaque phase dans le fluide multiphasique en supplément du débit cumulé (e.g. instantané) du mélange multiphasique dans la ligne. Il suffit dans le deuxième cas d'une simple multiplication entre la fraction d'une phase respective et le débit total pour obtenir le débit de la phase respective. On parle pour un compteur métrique adapté à fournir une telle estimation, dans le cas de fluide multiphasique, de compteur multiphasique, appelé communément compteur MPFM (acronyme provenant de l'anglais « multiphase Flowmeter »). Il peut s'agir par exemple d'un débitmètre massique ou d'un analyseur. Un tel compteur implique des technologies complexes, et les mesures données par le ou les capteur(s) inclus dans un tel compteur sont notamment très sensibles aux propriétés des fluides. Par conséquent, il arrive souvent que le compteur n'utilise pas les bons paramètres de calibration et/ou certains de ces capteurs peuvent dériver plus vite que prévu, et ainsi que le compteur fournisse une valeur relativement inexacte du débit du fluide. Le procédé de la figure 1 permet de pallier à ce problème.

Le compteur multiphasique peut notamment fonctionner suivant le principe suivant, décrit en référence aux figures 2-4. Un compteur monophasique du séparateur de test peut fonctionner sur un principe similaire, comme sait l'apprécier l'homme du métier. Notamment, les équations présentées ci-dessous sont utilisées *mutatis mutandis,* à cela près que l'indice représentant la phase (trois valeurs possibles dans les équations ci-dessous : eau, gaz ou huile) est supprimé, puisqu'un compteur monophasique n'opère que sur une seule phase.

Le capteur du compteur métrique peut être un capteur gamma classique, envoyant des ondes à travers le fluide au niveau du capteur et mesurant l'atténuation massique de l'onde. Le capteur peut être adapté à envoyer plusieurs niveaux d'énergie, de manière à permettre un recoupement d'information suffisant pour un fluide multiphasique. On peut se contenter d'un seul niveau d'énergie pour un compteur monophasique. On note ci-dessous $\alpha$ l'atténuation linéaire en m$^{-1}$, $\mu$ l'atténuation massique en m$^2$/kg, et p la densité volumique en kg/m$^3$. On a par définition $\alpha = \mu * \rho$. L'atténuation massique $\mu$ dépend du composé et du niveau d'énergie gamma.

Pour le fluide hydrocarbure de l'exemple ci-dessus (une phase eau, une phase huile, et une phase gaz), il suffit au capteur d'être capable de faire au moins deux mesures (e.g. correspondant à deux niveaux d'énergie différents). Ces mesures font alors partie des données impliquées par le processus de DVR du procédé de la figure 1. On parle classiquement de niveau d'énergie bas et de niveau d'énergie haut (ou moyen), correspondant respectivement aux indices 1 et 2 dans les notations ci-dessous. Les paramètres de calibration comprennent alors une valeur d'atténuation pour chaque phase pure, par niveau d'énergie, que l'on peut noter $\mu_{gaz\_1}$, $\mu_{gas\_2}$, $\mu_{huile\_1}$, $\mu_{huile\_2}$, $\mu_{eau\_1}$ et $\mu_{eau\_2}$, et ils peuvent eux aussi être impliqués dans le processus de DVR. Ainsi, $\mu_{ph\_i}$ est l'atténuation massique $\mu$ mesurée par le capteur pour le niveau d'énergie *i,* en présence de la seule phase *ph.*

Il est à noter que si, pour une installation de production d'hydrocarbures donnée, la salinité des puits est différente d'un puits à l'autre, alors ces paramètres peuvent varier. A contrario, deux puits avec la même salinité devraient avoir les mêmes valeurs d'atténuation eau pour une même installation de production. En outre, il est à noter que le capteur peut en fait mesurer également un troisième niveau d'énergie, par exemple encore plus haut que les deux autres. A un tel niveau d'énergie, et en général aux niveaux d'énergie particulièrement élevés, les différents composés absorbent sensiblement la même quantité d'énergie (on pourrait traduire cela par le fait que les atténuations massiques sont environ égales à ce niveau d'énergie). Un compteur peut toutefois exploiter cette énergie pour valider son estimation du débit et/ou des fractions eau, huile et gaz fournie(s) sur la base des deux autres niveaux d'énergie, de préférence avec une forte incertitude. Il est également possible de relier la mesure effectuée pour ce troisième niveau d'énergie à la densité du mélange par une droite obtenue après calibration.

Grâce à la connaissance des paramètres $\mu_{gaz\_1}$, $\mu_{gas\_2}$, $\mu_{huile\_1}$, $\mu_{huile\_2}$, $\mu_{eau\_1}$ et $\mu_{eau\_2}$, on peut tracer un triangle dit « triangle de calibration » sur la base des six valeurs suivantes :

- 
$$\alpha_{gaz\_1} = \mu_{gaz\_1} * \rho_{gaz}$$

- 
$$\alpha_{gaz\_2} = \mu_{gaz\_2} * \rho_{gaz}$$

- 
$$\alpha_{huile\_1} = \mu_{huile\_1} * \rho_{huile}$$

- 
$$\alpha_{huile\_2} = \mu_{huile\_2} * \rho_{huile}$$

$$\alpha_{eau\_1} = \mu_{eau\_1} * \rho_{huile}$$

$$\alpha_{eau\_2} = \mu_{eau\_2} * \rho_{huile}$$

Les densités volumiques $\rho$ sont des variables qui dépendent des valeurs de pression P et de température T de la ligne où le compteur opère et de la composition du fluide, informations données par ailleurs (e.g. par une mesure effectuée par des capteurs dédiés, e.g. par d'autres dispositifs, par exemple l'un ou plusieurs de ceux adaptés à fournir une autre estimation du débit dans le puits et mentionnés précédemment, notamment par exemple pour P et T, ou par une valeur prédéterminée, notamment par exemple pour le GOR - ratio gaz/huile de l'hydrocarbure à l'exclusion de l'eau, de l'anglais « gas/oil ratio » - et/ou la salinité qui sont des hypothèses fluide prédéterminées) et donc connues du compteur métrique qui peut donc en déduire les densités volumiques $\rho$. Ainsi si les conditions opératoires P et T changent et/ou si la composition du fluide (GOR, salinité) change, le triangle de calibration est également modifié, car les densités gaz, huile et eau varient. Ainsi les atténuations linéaires varient également. En ce sens, les densités volumiques sont des paramètres de calibration qui correspondent notamment à des hypothèses fluide prédéterminées (GOR et salinité). Une partie ou toutes ces données peuvent faire elles aussi partie des données impliquées par le processus de DVR. La figure 2 montre schématiquement un triangle de calibration 20 correspondant à une telle calibration, avec des sommets de coordonnées ($\alpha_{gaz\_1}$, $\alpha_{gas\_2}$), ($\alpha_{huile\_1}$, $\alpha_{huile\_2}$), et ($\alpha_{eau\_1}$, $\alpha_{eau\_2}$), correspondant donc aux six valeurs listées ci-dessus.

La figure 3 montre un exemple du compteur : le compteur 30. Pour réaliser la calibration, le compteur 30 peut recevoir un échantillon 34 de chacune des phases (une seule phase dans le cadre d'un compteur monophasique). Ensuite, le compteur 30 mesure à S20, grâce à un capteur 32 prévu à cet effet, les atténuations massiques de chacune des phases, ce qui permet de déterminer S30 les paramètres de calibration (i.e. les atténuations linéaires, et/ou les atténuations massiques elles-mêmes, suivant le point de vue retenu, sachant que l'une ou l'autre de ces données peut être enregistrée par le compteur comme paramètre de calibration, quitte à ensuite effectuer le calcul adéquat). En cours d'utilisation, le compteur 30 mesure une atténuation massique du fluide (qui est alors un mélange multiphasique). Le détecteur du capteur 32 mesure et enregistre des « counts » $N^1_{counts}$ pour chaque niveau d'énergie (au moins les niveaux 1 « bas » et 2 « haut », mais possiblement un niveau encore plus élevé également).

Grâce aux équations suivantes :

$$N^i_{counts} = N^i_0 * decay * exp~[-~(x_{eau} * \mu_{eau\text{-}i} * \rho_{eau} + x_{gaz} * \mu_{gaz\text{-}i} * \rho_{gaz} + x_{huile} * \mu_{huile\text{-}i} * \rho_{huile}) ~x~ Dthroat~]$$

pour i = 1 et 2,
et

$$x_{eau} + x_{gaz} + x_{huile} = 1,$$

avec $x_{eau}$, $x_{gaz}$ et $x_{huile}$ qui désignent les fractions de chacune des phases, les densités volumiques $\rho$ qui sont prédéterminées et données par la composition et la thermodynamique, et $N^i_0$, decay et Dthroat qui sont connus,
le compteur 30 peut déterminer les fractions instantanées de chacune des phases.

Un programme d'ordinateur peut être prévu pour exécuter le procédé. Ce programme est de manière connue en informatique adapté à être enregistré sur une mémoire d'enregistrement de données et peut comprendre des instructions pour exécuter le procédé, notamment les étapes S10, S12 et S20. Ainsi, tout système informatique peut comprendre une mémoire ayant enregistré le programme. Dans tous les cas, le programme d'ordinateur est prévu pour commander l'exécution du procédé par un système prévu à cet effet. Le système (qui peut être l'un des dispositifs comme par exemple le séparateur de test) est adapté à communiquer avec tous les dispositifs impliqués dans le procédé. Ce programme est de manière connue en informatique adapté à être enregistré sur une mémoire d'enregistrement de données et peut comprendre des instructions. Ainsi, le programme d'ordinateur est enregistré par une mémoire du système. Le programme d'ordinateur peut comprendre tout type d'instructions connues en informatique. Ces instructions peuvent être des lignes de code, écrites dans tout langage informatique, par exemple orienté objet, possiblement sous forme de code source, code compilé ou code précompilé. Il peut également s'agir de programme d'installation (i.e.

rendant un système adapté à exécuter le procédé ou à en commander l'exécution). Le programme peut être tangiblement enregistré sur une mémoire de stockage adaptée à cela. Il peut s'agir d'une mémoire volatile ou non volatile, par exemple EPROM, EEPROM, mémoire flash, ou disques CD-Rom.

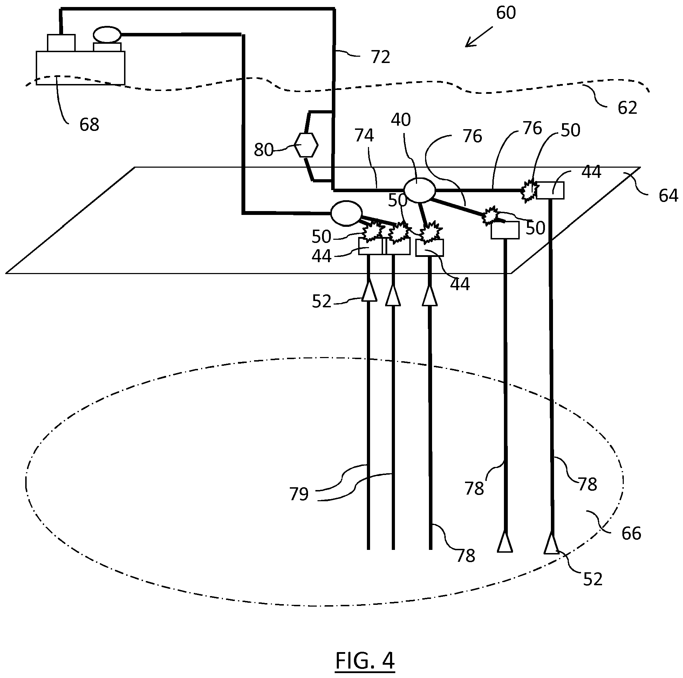

La figure 4 représente un exemple d'une installation de production d'hydrocarbures comprenant plusieurs compteurs métriques, dans laquelle le procédé peut être mis en œuvre.

L'installation 60 comprend une ligne de production d'hydrocarbure, constituée de plusieurs conduites dans lesquelles le fluide s'écoule. La ligne de production comprend notamment plusieurs puits de production 78 de fluide débouchant depuis le réservoir 66 d'hydrocarbures. Trois puits de production 78 sont représentés sur la figure, mais tout nombre convenant à une couverture optimale du réservoir 66 est envisageable pour tenir compte de la complexité géologique du réservoir, de la qualité des fluides présents dans le réservoir, de la localisation géographique du réservoir (à terre, en mer, en mer très profonde), et des contraintes inhérentes. La ligne de production comprend une conduite de fluide 74 alimentée en fluide par un manifold 40. La conduite de fluide de production 74 est une conduite principale recevant le fluide depuis tous les puits de production 78 forés dans le réservoir 66 via un manifold (ici le manifold 40), faisant office de rassembleur. La conduite de fluide de production 74 se situe sur un fond marin 64, et alimente un « riser » 72 (i.e. une conduite sensiblement verticale) aboutissant à une station principale, e.g. en l'occurrence une unité flottante de production, de stockage et de déchargement 68 (connue sous le sigle FPSO, pour « Floating Production Storage and Offloading ») située à la surface marine 62. L'installation 60 comprend également une ligne d'injection comprenant plusieurs puits d'injection 79, et fonctionnant selon un principe symétrique à celui de la ligne de production.

L'installation 60 intègre (i.e. comprend) également, pour chaque puits de production 78 et chaque puits d'injection 79 un compteur métrique 50, tel que décrit précédemment. Le compteur métrique 50 est représenté sur la figure en amont des têtes de puits 44, à chaque fois sur une conduite de la ligne, mais il peut être à tout autre endroit convenable selon l'appréciation de l'homme du métier. En outre, l'installation 60 pourrait comprendre une quantité de compteurs métriques 50 inférieure ou supérieure à celle représentée sur la figure, selon les besoins de l'exploitation. L'installation 60 comprend également d'autres dispositifs 52 disposés sur les différentes lignes à tout endroit convenable à leur fonction (non détaillée ici), chacun étant adapté à fournir une deuxième estimation du débit dans la ligne où il est installé en sus de sa fonction. D'autres estimations pour chaque puits pourraient être prévues par d'autres dispositifs. L'installation comprend également un séparateur de test 80 reliés aux trois puits de production 78 représentés, et adapté à dériver le fluide de production issu du manifold 40 pour en estimer le débit, phase par phase, fournissant ainsi une estimation du débit cumulé des trois puits de production 78. Sur la figure, le séparateur de test 80 est représenté sur la conduite en aval du manifold 40, mais cette représentation n'est bien entendu que schématique, étant entendu que le séparateur de test 80 peut être placé à tout endroit permettant de recueillir la production de plusieurs puits de production 78 et qu'il peut être déplacé à guise pour tester successivement d'autres groupes de puits de production 78. Ainsi, l'installation 60 est adaptée à l'exécution du procédé de la figure 1 avec les dispositifs 50 et/ou 52 des puits de production 78 et le séparateur de test 80, soit par le séparateur de test 80 lui-même qui a alors un programme comprenant des instructions pour cela et est adapté à communiquer avec les dispositifs 50 et 52, ou par un système adapté à communiquer avec les dispositifs 50, 52 et 80. L'installation 60 permet une meilleure production d'hydrocarbures, grâce à une bonne estimation ultérieure des débits.

Le processus de DVR S20 est maintenant discuté.

Le processus de réconciliation et validation de données (DVR) implique les données déterminées en S10 et S12. Cela signifie que le processus de DVR opère une remise en question de toutes ces données. En effet, les données « impliquées » par le processus de DVR sont, par définition, les variables du processus de DVR. La réconciliation est conditionnée par une égalité (e.g. au moins substantielle, i.e. avec une différence inférieure à une erreur prédéterminée, voire nulle) entre la somme des estimations du débit du fluide à fournir par le dispositif de chaque puits et l'estimation du débit cumulé à fournir par le séparateur de test. En d'autres termes, la DVR est faite sur l'hypothèse de base que la somme des estimations du débit du fluide à fournir pour chaque puits devrait être égale à l'estimation du débit cumulé.

La DVR est un processus connu permettant de fournir des valeurs en entrées (i.e. les données impliquées, e.g. des mesures respectives aux dispositifs dont la mesure du capteur du compteur métrique, et *in fine* réconciliées par le processus) et de modifier ces valeurs selon des intervalles d'incertitudes prédéterminés et des contraintes prédéterminées, pour respecter une ou plusieurs condition(s) impliquant directement ou indirectement les valeurs en question. Cela peut se faire de manière efficace en minimisant une fonction de coût pénalisant, pour chaque donnée réconciliée, la différence entre sa valeur avant réconciliation et sa valeur réconciliée. Par ailleurs, pour une utilisation plus fine de la DVR, la différence peut être pondérée dans la fonction de coût par une incertitude relative à ladite donnée réconciliée. Plus l'incertitude est grande, moins la pénalité associée à la différence entre valeur avant réconciliation et valeur réconciliée est grande car ladite différence est plus « attendue » en théorie. Cette incertitude peut être déterminée de n'importe quelle manière, par exemple sur la base de connaissances prédéterminées, par exemple du géologue ou du constructeur de dispositif. Ainsi, on tient compte des particularités liées à chacune des données impliquée dans le processus de DVR. Par exemple, les incertitudes liées aux données respectives au séparateur de test et déterminées en S12 peuvent être inférieures aux incertitudes liées aux autres données (déterminées en S10). En effet, le séparateur de test étant prévu pour une utilisation ponctuelle, il est généralement plus fiable que les dispositifs permanents de l'installation. Une incertitude constructeur peut ainsi être prédéterminée pour le séparateur de test, cette incertitude étant plus faible que l'incertitude constructeur prédéterminée pour des compteurs multiphasiques de puits.

Ainsi, le processus de DVR peut consister de manière générale en la résolution du programme de minimisation suivant :

$$\text{Min} \sum_i \left( \frac{k_i^* - k_i}{e_i} \right)^2$$

avec $k_i$ les données impliquées dans par le processus (i.e. les données à réconcilier),

$e_i$ l'incertitude le la donnée i,

$k_i^*$ la valeur réconciliée de la donnée i,

$e_i^*$ l'incertitude réconciliée de la donnée i,

$y_j$ les variables non mesurées et donc par exemple calculées,

et le terme $\left( \frac{k_i^* - k_i}{e_i} \right)^2$ est appelé « pénalité »,

sous la contrainte mentionnée plus haut et liant les variables $k_i$ et $y_j$.

En effet, le procédé exécute une DVR pour « égaliser » certaines valeurs. Précisément, les données déterminées en S10 et S12 sont théoriquement censées aboutir à une égalité entre une somme des estimations du débit du fluide pour chaque puits et une estimation de débit cumulé pour le séparateur de test. Ainsi la somme des pénalités est minimisée en respectant, au moins sensiblement, cette contrainte d'égalité. En outre, le procédé de DVR peut comprendre une ou plusieurs contraintes d'inégalité de type $G(k_i^*, y_j) > 0$, qui correspondent par exemple aux bornes du système (e. g. le fait par exemple qu'une pression doit être supérieure à 0, qu'un ratio, tel le water-cut, doit être inférieur à 100%). Cela permet de réduire le risque de réconciliation non réaliste.

La solution présentée peut dans un exemple considérer toutes les mesures, tous les modèles et tous les paramètres du système modélisés et prendre en compte leurs incertitudes respectives afin de fournir une estimation unique de chaque mesure ou de chaque paramètre calculable avec une incertitude calculée garantissant la qualité de la valeur finale. La redondance des mesures est alors un facteur clé. La réconciliation de plusieurs modèles et de mesures constitue une sorte de compteur virtuel avancé. Afin de s'affranchir des erreurs d'interprétation des calculateurs utilisés dans la plupart des compteurs, le procédé utilise les mesures brutes de chaque compteur et des équations bien définies qui sont réconciliées avec les autres données du système. Pour cela la méthodologie DVR est utilisée : l'idée de la DVR est d'utiliser la redondance de données d'un système comme source d'information pour corriger les mesures. Chaque mesure est corrigée aussi faiblement que possible de sorte que les valeurs corrigées satisfassent toutes les contraintes du processus. Le procédé proposé fonctionne principalement en régime permanent. Toutefois, certains régimes transitoires dus à des opérations peuvent être détectés automatiquement (ex : démarrage d'un puits) et les mesures et les modèles influencés par ces régimes sont alors soit sortis de la réconciliation, soit les incertitudes associées sont augmentées pour faire comprendre à l'optimiseur que ces données ne sont pas dans leur gamme de précision habituelle. Enfin, la méthodologie DVR utilisée gère dans un exemple les temps de résidence des fluides de production lorsque les longueurs de ligne sont importantes : ainsi, les débits au niveau du traitement surface au temps t seront réconciliés avec des débits au niveau des puits au temps t - 2h par exemple. En d'autres termes, le procédé peut dans un exemple veiller à ce que les données déterminées en S10 et S12 et donc impliquées en S20 soit toutes respectives à la fourniture d'estimations différentes du débit, ces estimations différentes étant relatives au débit à un même instant.

Le procédé peut comprendre une détection de toute donnée réconciliée pour laquelle la différence entre sa valeur avant réconciliation et sa valeur réconciliée est supérieure à un seuil dépendant de l'incertitude relative à la donnée réconciliée. Ainsi, le procédé détecte les données déterminées en S10 (et potentiellement en S12) trop éloignées de leur valeur réconciliée, l'éloignement étant envisagé en fonction de l'incertitude relative à la donnée. On peut alors réitérer le processus de DVR en S20, en ôtant (à chaque réitération) la donnée réconciliée ayant le plus de poids dans la valeur de la fonction de coût. On peut effectuer cette réitération tant que la valeur de la fonction de coût est supérieure à un seuil prédéterminé. Cela permet d'affiner l'estimation du débit, en omettant les données déterminées en S10 et/ou S12 trop peu fiables.

Dans un exemple, la réconciliation est effectuée avec toutes les données du modèle et leurs incertitudes. Si une donnée est corrigée dans un intervalle deux fois supérieur à son incertitude originale, elle est détectée et donc considérée comme suspecte. Une autre détection peut être déclenchée lorsque la somme des pénalités de la réconciliation est supérieure à une valeur définie. Si cette détection est activée, la donnée la plus pénalisée sera mise en silence et une nouvelle réconciliation s'effectuera sans qu'elle y soit intégrée. Lorsque cette autre détection n'est pas activée, la réconciliation va au bout mais affiche une forte pénalité. Dans ce cas pour savoir quelle mesure est erratique une analyse détaillée peut être effectuée en regardant en priorité les données qui afficheront les plus grosses pénalités. Le procédé permet donc dans un exemple la surveillance et le suivi de tous les capteurs à distance (e.g. même en un autre lieu), d'identifier les capteurs défaillants à distance, et de faire un suivi de la qualité des mesures à l'aide des incertitudes calculées. Le procédé peut dans un exemple aussi calculer des valeurs de remplacement aux endroits où les capteurs sont défaillants et aux endroits où aucun capteur n'a été mis en place. Le procédé peut dans un exemple utiliser les mesures brutes des compteurs pour éviter des erreurs d'interprétation des calculateurs. Le procédé peut dans un exemple fournir des valeurs et des incertitudes validées à toutes les données du système. Le procédé permet dans un exemple une réallocation de la production par lignes et par puits plus fiable.

Les données impliquées dans le processus de DVR et déterminées en S10 et S12 sont maintenant discutées.

Ces données sont, pour chaque dispositif considéré d'un puits de production, les données de base qui permettent au dispositif de fournir une estimation du débit dans la ligne. Une même donnée peut constituer une donnée de base pour plusieurs dispositifs. Par « donnée de base », l'homme du métier comprend qu'il s'agit d'une variable fondamentale permettant de calculer un débit en fonction de modèles physiques, par exemple thermodynamiques et/ou mécaniques. Cela comprend des mesures de capteurs, des hypothèses prédéterminées, par exemple des hypothèses fluides, et/ou des valeurs de paramètres de calibration (par exemple des propriétés physiques, mécaniques, ou chimiques des dispositifs). Les données déterminées en S10 comprennent des mesures prises à différents emplacements du site, par exemple des mesures de pressions, de températures, ou encore de débits. Les données déterminées en S12 comprennent des mesures prises au niveau du séparateur de test, notamment les mesures des capteurs des compteurs métriques du séparateur de test.

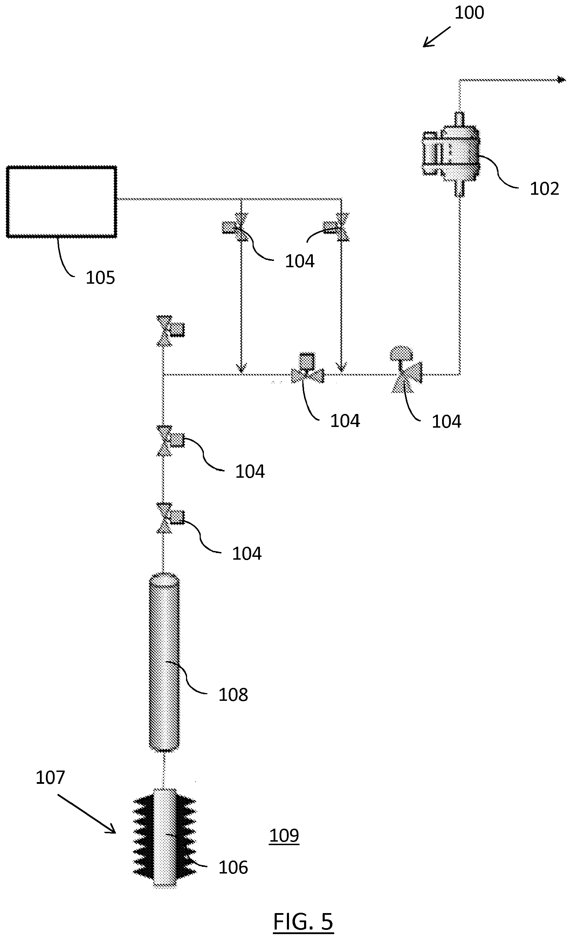

La figure 5 représente un exemple de puits 100 sur laquelle le procédé peut être mis en œuvre. Le puits 100 comprend plusieurs dispositifs adaptés chacun à fournir une estimation différente du débit dans le puits, lesquels comprennent le compteur métrique 102, les duses 104 (dont certaines reliées à un injecteur de méthanol 105 et/ou ne fournissant le débit qu'indirectement), le dispositif 106 associé à un module d'afflux (avec des perforations 107 dans le réservoir 109), et la conduite 108 dont seul un segment est représenté sur la figure. Cet exemple illustre un puits de production avec tous les dispositifs habituels. Plusieurs puits de production de la sorte peuvent être reliés à un séparateur de test pour exécuter le procédé de la figure 1. Le procédé a été testé sur une installation comprenant de tels puits de production, et il s'est révélé efficace pour améliorer l'estimation du débit fournie (par exemple par le seul compteur métrique).

Le fonctionnement de ces différents dispositifs, bien que connu de l'homme du métier, est maintenant détaillé. Les différentes données mentionnées ci-dessous et permettant d'obtenir une estimation du débit pour chaque dispositif peuvent, toutes ou au moins en partie, être impliquées dans le processus de DVR. En effet, on détaille ci-dessous, pour chaque dispositif, les données respectives à déterminer en S10 (ce sont celles pouvant être impliquées par le processus de DVR, les autres étant considérées comme constantes ou exactes, et donc n'étant généralement pas impliquées). On détaille également la séquence de calculs permettant d'aboutir à l'estimation du débit. Pour le séparateur de test, les données déterminées en S12 peuvent correspondre au détail fourni ci-dessous pour un compteur métrique multiphasique, à l'adaptation près que le séparateur de test comprend en fait plusieurs compteurs monophasiques. L'ensemble de tous les calculs constituent la contrainte de la DVR. La condition d'égalité entre la somme des estimations par puits et l'estimation du débit cumulé pour l'ensemble des puits est entraînée par l'utilisation d'une équation reliant les variables dans l'optimisation sous-jacente à la DVR décrite plus haut. La contrainte d'égalité entre les différentes estimations du débit du fluide dans un même puits est elle portée par l'utilisation de la même variable pour dénoter ce débit (Qtot ci-dessus) Il est à noter que des données respectives à certains dispositifs sont également respectives au compteur métrique, de sorte qu'elles ne sont déterminées qu'une seule fois et qu'elles sont représentées par la même variable dans l'optimisation sous-jacente à la DVR. L'exemple où l'on effectue la DVR sur la base de tous ces modèles permet une estimation du débit après réconciliation la plus exacte possible.

Comme indiqué précédemment, la mesure réalisée par le capteur d'un compteur métrique sur le fluide est une mesure électrique, nucléaire et/ou optique. Ainsi, un compteur métrique peut par exemple être adapté à estimer le débit à partir de mesures de permittivité, de conductivité, d'atténuation gamma (pour plusieurs niveaux d'énergie comme expliqué précédemment), de dP (perte de charges), de pression et de température. Ces mesures peuvent être toutes impliquées par le processus de DVR. En outre, les données respectives au compteur métrique peuvent également comprendre des hypothèses fluide prédéterminées comme expliqué précédemment, comme le GOR (composition fluide réservoir dans réservoir), la salinité, les paramètres de calibration (atténuations gamma, dans le cas d'un compteur multiphasique : huile/eau/gaz à différents niveaux d'énergie et références de permittivités huile et gaz). Ces hypothèses peuvent également être impliquées par le processus de DVR. Un compteur métrique se base également sur des constantes pour estimer le débit, et ces constantes ne sont pas nécessairement impliquées par le processus de DVR. Il s'agit des équations permittivités huile et gaz (fonction de référence huile et gaz, Pression, Température), de la composition phase gaz, de la composition phase huile, de la géométrie Venturi, et de l'équation conductivité eau (fonction de salinité, Température, Pression). Ainsi, le modèle d'un compteur métrique multiphasique peut calculer des fractions huile/gaz/eau suivant une fonction f(permittivité ou conductivité, atténuation gamma, Pression, Température, GOR, Salinité, composition huile, composition gaz, permittivité huile, permittivité gaz, équation permittivités huile et gaz ou équation conductivité eau, atténuations gamma huile/eau/gaz) comme indiqué précédemment. Le modèle du compteur métrique multiphasique peut également calculer des densités huile / gaz/ eau suivant des fonctions f(composition huile, composition gaz, GOR, salinité, Pression, Température). Le modèle du compteur métrique multiphasique peut ensuite calculer une densité mélange suivant une fonction f(densités huile/eau/gaz, fractions huile/eau/gaz), puis un débit total Qtot suivant une fonction f(dP, densité mélange, géométrie Venturi), puis des débits par phase Qhuile / Qeau / Qgaz suivant une fonction f (Qtot, fraction huile / eau / gaz). Les explications précédentes concernent un compteur multiphasique dans un puits, mais le principe est similaire pour chaque compteur monophasique du séparateur de test. Le séparateur de test permet ainsi de déterminer des estimations différentes de débits cumulés par phase Qhuile' / Qeau' / Qgaz' indépendamment les unes des autres selon ce principe. Le processus S20 de DVR implémente la contrainte d'égalité par une équation de type Qhuile'=Somme des Qhuile fournis pour chaque puits, Qeau'=Somme des Qeau fournis pour chaque puits, et Qgaz'=Somme des Qgaz fournis pour chaque puits.

Comme décrit ci-après, on peut encore ajouter de la redondance avec d'autres dispositifs adaptés à fournir une estimation du débit par puits. Les estimations données ci-dessous ne fournissent pas un résultat par phase, mais seulement un Qtot global aux trois phases à chaque fois. La contrainte d'égalité entre les débits estimés pour un même puits est portée par l'utilisation de la même variable Qtot dans le processus de DVR.

Une duse (« choke » en anglais) est par exemple adaptée à fournir une estimation du débit du fluide dans un puits en fonction d'une ouverture de vanne et d'une mesure réalisée par au moins un capteur sur le fluide fournissant les pertes de charge associées à l'ouverture de vanne (typiquement deux capteurs de pression fournissant chacun une mesure de pression qui seront comparées). Ainsi, les données mesurées sont la pression en amont de la duse, la pression en aval de la duse, et le pourcentage d'ouverture de vanne sous-marine « % ouverture choke (subsea) ». Les hypothèses sont le Cv max et le pourcentage d'ouverture de vanne en surface » % ouverture choke (topside) ». Toutes ces données peuvent être impliquées par le processus de DVR. Le modèle peut également se baser sur une constante non impliquée dans la DVR : la courbe choke. Ainsi, la duse permet de fournir le débit Qtot suivant une fonction f(Pression amont, Pression aval, %ouverture choke, densité mélange, Cv max, courbe choke).

Le dispositif associé au module d'afflux (« inflow module » en anglais) est la partie du puits de production au niveau du réservoir comprenant les perforations/ouvertures/entrées pour la réception de l'hydrocarbure). Le module d'afflux est le dispositif virtuel d'afflux de l'hydrocarbure dans le puits. Un modèle d'estimation du débit est fourni pour ce dispositif virtuel par le biais de capteurs appartenant à la partie du puits de production mentionnée. Ainsi, cette partie du puits peut conceptuellement être « associée » au module d'afflux et est ainsi adapté à fournir une estimation du débit du fluide dans le puits selon le modèle. L'estimation est faite en fonction d'une mesure de pression réalisée par au moins un capteur sur le fluide et de propriétés physico-chimiques du fluide, données pouvant toutes être impliquées dans le processus de DVR. Le module d'afflux permet d'estimer le débit en fonction de mesures, qui sont la pression fond de puits (potentiellement la pression en entrée de la conduite si la conduite est assimilée au puits) et la pression réservoir initiale. Le modèle fait également intervenir une hypothèse qui remplace la pression réservoir initiale en cours de production, à savoir la pression réservoir interpolée (fournie par le géologue). Ces données sont impliquées par la DVR. Des constantes non impliquée interviennent également : les propriétés de liaison couche-trou. Ainsi, on peut estimer le débit du fluide Qtot selon une fonction f(Pression fond de puits, Pression réservoir (initiale ou interpolée), propriétés liaison couche-trou).

La conduite (« pipe » en anglais) est adaptée à fournir une estimation du débit du fluide dans le puits en fonction de propriétés géométrique et/ou mécaniques de la conduite et d'une mesure réalisée par au moins un capteur sur le fluide fournissant les pertes de charge et/ou de température associées aux propriétés géométrique et/ou mécaniques de la conduite. Ainsi, on mesure Pression entrée et Pression sortie, et/ou Température entrée et Température sortie, et on fait des hypothèses de propriétés mécaniques et de propriétés thermiques de la conduite. Toutes ces données peuvent être impliquées par la DVR. On se base alors sur une constante non impliquée, à savoir la géométrie du pipe, pour effectuer, et ce de manière récursive, une série de calculs permettant de converger vers une estimation de débit. Ces calculs sont ceux de la vitesse suivant une fonction f(Qtot, géométrie pipe), des conditions écoulement suivant une fonction f(composition huile, composition gaz, densité mélange, vitesse), du débit total suivant une fonction f(Pression entrée, Pression sortie, densité mélange, géométrie pipe, propriétés mécaniques, conditions écoulement) ou suivant une fonction f(Température entrée, Température sortie, densité mélange, géométrie pipe, propriétés thermiques, conditions écoulement). Cette séquence de calculs est comme indiqué précédemment récursivement répété.

Bien entendu, l'exemple de la figure 5 permet en théorie de réconcilier de nombreuses données, avec une redondance de degré égal au nombre d'estimations disponibles. Toutefois, pour les puits où moins de données sont recueillies, ou alors quand certaines données sont omises comme indiqué plus haut, on peut ne réconcilier qu'une combinaison des modèles décrits-ci-dessus. Dans la mesure où l'on dispose d'au moins une estimation par puits, et d'un séparateur de test reliant les puits, le procédé de la figure 1 améliore l'estimation par puits.

**Revendications**

1. Procédé de production d'hydrocarbures sur une ligne de production comprenant au moins deux puits de production (78), chaque puits de production (78) comprenant au moins un dispositif adapté à fournir une estimation du débit d'un fluide dans le puits en fonction de données respectives, les puits étant reliés à un séparateur de test (80) adapté à fournir une estimation du débit cumulé du fluide pour l'ensemble des puits en fonction de données respectives, dans lequel le procédé comprend, pendant la production :

   • la détermination (S10) des données respectives à la fourniture d'une estimation du débit par le dispositif de chaque puits ;
   • la détermination (S12) des données respectives à la fourniture d'une estimation du débit cumulé par le séparateur de test (80) ; et
   • un processus (S20) de réconciliation et validation de données (DVR) impliquant les données déterminées, la réconciliation étant conditionnée par une égalité au moins substantielle entre la somme des estimations du débit du fluide à fournir par le dispositif de chaque puits et l'estimation du débit cumulé à fournir par le séparateur de test (80).

2. Procédé selon la revendication 1, dans lequel les données respectives à la fourniture d'une estimation du débit cumulé par le séparateur de test (80) comprennent au moins une mesure réalisée par un capteur du séparateur de test.

3. Procédé selon la revendication 2, dans lequel le séparateur de test comprend au moins un compteur métrique (50), le capteur réalisant la mesure étant un capteur du compteur métrique (50).

4. Procédé selon la revendication 3, dans lequel le séparateur de test (80) comprend plusieurs compteurs métriques (50) monophasiques adaptés chacun à fournir une estimation du débit d'une phase respective du fluide en fonction d'une mesure réalisée par un capteur respectif.

5. Procédé selon l'une des revendications 1 à 4, dans lequel le fluide comprend une phase eau, une phase gaz et une phase huile.

6. Procédé selon l'une des revendications 1 à 5, dans lequel au moins un puits de production (78) comprend un compteur métrique (50) adapté à fournir une estimation du débit du fluide dans le puits en fonction de données respectives incluant une mesure réalisée par au moins un capteur du compteur métrique (50) sur le fluide.

7. Procédé selon la revendication 6, dans lequel un puits de production (78) comprenant un compteur métrique (50) comprend en outre au moins un autre dispositif (52) adapté à fournir une estimation du débit du fluide dans le puits en fonction de données respectives qui sont déterminées et impliquées dans le processus de réconciliation et validation de données.

8. Procédé selon la revendication 7, l'autre dispositif est une duse, un dispositif associé à un module d'afflux, et/ou une conduite.

9. Programme d'ordinateur, adapté à être enregistré sur une mémoire d'enregistrement de données, comprenant des instructions pour exécuter le procédé selon l'une des revendications 1-8.

10. Système adapté à communiquer avec des dispositifs compris dans au moins deux puits de production (78) d'une ligne de production d'hydrocarbures, les dispositifs étant adaptés à fournir une estimation du débit d'un fluide dans le puits en fonction de données respectives, et avec un séparateur de test (80) relié aux puits et adapté à fournir une estimation du débit cumulé du fluide pour l'ensemble des puits en fonction de données respectives, le système comprenant une mémoire ayant enregistré le programme selon la revendication 9.

11. Installation de production d'hydrocarbures (60), comprenant :

   • une ligne de production comprenant au moins deux puits de production (78), chaque puits de production comprenant au moins un dispositif adapté à fournir une estimation du débit d'un fluide dans le puits en fonction de données respectives, les puits étant reliés à un séparateur de test (80) adapté à fournir une estimation du débit cumulé du fluide pour l'ensemble des puits en fonction de données respectives, et

• le système selon la revendication 10, le système étant adapté à communiquer avec les dispositifs et le séparateur de test (80) de la ligne de production.

**Patentansprüche**

1. Verfahren zur Öl-Produktion auf einer Produktionslinie, umfassend mindestens zwei Produktionsbohrungen (78), wobei jede Produktionsbohrung mindestens eine Vorrichtung umfasst, die ausgelegt ist, um eine Schätzung des Durchsatzes eines Fluids in der Bohrung in Abhängigkeit von entsprechenden Daten zu liefern, wobei die Bohrungen mit einem Ölabscheider (80) verbunden sind, der ausgelegt ist, um eine Schätzung des kumulierten Durchsatzes des Fluids für die Gesamtheit der Bohrungen in Abhängigkeit von entsprechenden Daten zu liefern, wobei das Verfahren während der Produktion Folgendes umfasst:

   - Bestimmen (S10) der entsprechenden Daten bei der Lieferung einer Schätzung des Durchsatzes durch die Vorrichtung von jeder Bohrung;
   - Bestimmen (S12) der entsprechenden Daten bei der Lieferung einer Schätzung des kumulierten Durchsatzes durch den Ölabscheider (80); und
   - einen Prozess (S20) des Ausgleichs und der Validierens von Daten (DVR), der die bestimmten Daten impliziert, wobei der Ausgleich bedingt ist durch eine mindestens wesentliche Gleichheit zwischen der Summe der Schätzungen des Durchsatzes des Fluids, der von der Vorrichtung jeder Bohrung geliefert werden soll, und der Schätzung des kumulierten Durchsatzes, der vom Ölabscheider (80) geliefert werden soll.

2. Verfahren nach Anspruch 1, wobei die entsprechenden Daten bei der Lieferung einer Schätzung des kumulierten Durchsatzes durch den Ölabscheider (80) mindestens eine Messung umfassen, die durch einen Sensor des Ölabscheiders durchgeführt wird.

3. Verfahren nach Anspruch 2, wobei der Ölabscheider mindestens einen metrischen Zähler (50) umfasst, wobei der Sensor, der die Messung durchführt, ein Sensor des metrischen Zählers (50) ist.

4. Verfahren nach Anspruch 3, wobei der Ölabscheider (80) mehrere monophasische metrische Zähler (50) umfasst, die jeweils ausgelegt sind, um eine Schätzung des Durchsatzes einer entsprechenden Phase des Fluids in Abhängigkeit von einer Messung zu liefern, die von einem entsprechenden Sensor durchgeführt wird.

5. Verfahren nach einem der Ansprüche 1 bis 4, wobei das Fluid eine Wasserphase, eine Gasphase und eine Ölphase umfasst.

6. Verfahren nach einem der Ansprüche 1 bis 5, wobei mindestens eine Produktionsbohrung (78) einen metrischen Zähler (50) umfasst, der ausgelegt ist, um eine Schätzung des Durchsatzes des Fluids in der Bohrung in Abhängigkeit von entsprechenden Daten zu liefern, darin eingeschlossen eine Messung, die durch mindestens einen Sensor des metrischen Zählers (50) auf dem Fluid durchgeführt wird.

7. Verfahren nach Anspruch 6, wobei eine Produktionsbohrung (78), die einen metrischen Zähler (50) umfasst, außerdem mindestens eine weitere Vorrichtung (52) umfasst, die ausgelegt ist, um eine Schätzung des Durchsatzes des Fluids in der Bohrung in Abhängigkeit von entsprechenden Daten zu liefern, die im Prozess des Ausgleichs und der Validierens von Daten bestimmt und impliziert werden.

8. Verfahren nach Anspruch 7, wobei die weitere Vorrichtung eine Drossel, eine Vorrichtung, die mit einem Zustrommodul assoziiert ist, und/oder eine Leitung ist.

9. Computerprogramm, das ausgelegt ist, um in einem Speicher zur Aufzeichnung von Daten aufgezeichnet zu werden, umfassend Anweisungen, um das Verfahren nach einem der Ansprüche 1 - 8 durchzuführen.

10. System, das ausgelegt ist, um mit Vorrichtungen zu kommunizieren, die in mindestens zwei Produktionsbohrungen (78) einer Ölproduktionslinie enthalten sind, wobei die Vorrichtungen ausgelegt sind, um eine Schätzung des Durchsatzes eines Fluids in der Bohrung in Abhängigkeit von entsprechenden Daten zu liefern, und mit einem Ölabscheider (80), der mit den Bohrungen verbunden und ausgelegt ist, um eine Schätzung des kumulierten Durchsatzes des Fluids für die Gesamtheit der Bohrungen in Abhängigkeit von entsprechenden Daten zu liefern, wobei das System einen Speicher umfasst, der das Programm nach Anspruch 9 aufgezeichnet hat.

11. Anlage zur Ölproduktion (60), umfassend:

eine Produktionslinie, umfassend mindestens zwei Produktionsbohrungen (78), wobei jede Produktionsbohrung mindestens eine Vorrichtung umfasst, die ausgelegt ist, um eine Schätzung des Durchsatzes eines Fluids in der Bohrung in Abhängigkeit von entsprechenden Daten zu liefern, wobei die Bohrungen mit einem Ölabscheider (80) verbunden sind, der ausgelegt ist, um eine Schätzung des kumulierten Durchsatzes des Fluids für die Gesamtheit der Bohrungen in Abhängigkeit von entsprechenden Daten zu liefern, und

- das System nach Anspruch 10, wobei das System ausgelegt ist, um mit den Vorrichtungen und dem Ölabscheider (80) der Produktionslinie zu kommunizieren.

**Claims**

1. A method for producing hydrocarbons on a production line comprising at least two production wells (78), each production well comprising at least one device configured to supply an estimate of the flow rate of a fluid in the well as a function of respective data, the wells being coupled to a test separator (80) configured to provide an estimate of the cumulative flow rate of the fluid for all of the wells as a function of respective data, wherein the method comprises, during the production:

• the determination (S10) of respective data upon the provision of an estimate of the flow rate by the device of each well;
• the determination (S12) of the respective data upon the provision of an estimate of the cumulative flow rate by the test separator (80); and
• a process (S20) for data validation and reconciliation (DVR) involving the determined data, the reconciliation being conditioned by an at least substantial equality between the sum of the estimates of the flow rate of the fluid to be supplied by the device of each well and the estimate of the cumulative flow rate to be supplied by the test separator (80).

2. The method according to claim 1, wherein the respective data upon the provision of an estimate of the cumulative flow rate by the test separator (80) comprise at least one measurement done by a sensor of the test separator.

3. The method according to claim 2, wherein the test separator comprises at least one metric counter (50), the sensor performing the measurement being a sensor of the metric counter (50).

4. The method according to claim 3, wherein the test separator (80) comprises several monophasic metric counters (50) each configured to provide an estimate of the flow rate of a respective phase of the fluid as a function of a measurement done by a respective sensor.

5. The method according to one of claims 1 to 4, wherein the fluid comprises a water phase, a gas phase and an oil phase.

6. The method to one of claims 1 to 5, wherein at least one production well (78) comprises a metric counter (50) configured to provide an estimate of the flow rate of the fluid in the well as a function of respective data including a measurement done by at least one sensor of the metric counter (50) on the fluid.

7. The method according to claim 6, wherein a production well (78) comprising a metric counter (50) further comprises at least one other device (52) configured to provide an estimate of the flow rate of the fluid in the well as a function of respective data that are determined and involved in the data reconciliation and validation process.

8. The method according to claim 7, wherein the other device is a flow bean, a device associated with an inflow module, and/or a pipe.

9. A computer program, configured to be recorded in a data recording memory, comprising instructions for executing the method according to one of claims 1-8.

10. A system configured to communicate with devices comprised in at least two production wells (78) of a hydrocarbon production line, the devices being configured to provide an estimate of the flow rate of a fluid in the well as a function of respective data, and with a test separator (80) coupled to the wells and configured to provide an estimate of the cumulative flow rate of the fluid for all of the wells as a function of respective data, the system comprising a memory having recorded the program according to claim 9.

11. A hydrocarbon production installation (60), comprising:

• a production line comprising at least two production wells (78), each production well comprising at least one device configured to provide an estimate of the flow rate of a fluid in the well as a function of respective data, the wells being coupled to a test separator (80) configured to provide an estimate of the cumulative flow rate of the fluid for all of the wells as a function of respective data, and
• the system according to claim 10, the system being configured to communicate with the devices and the test separator (80) of the production line.

| | |
|---|---|
| S10 | détermination des données respectives à la fourniture d'une estimation du débit par le dispositif de chaque puits |
| | détermination des données respectives à la fourniture d'une estimation du débit cumulé par le séparateur de test — S12 |

processus de réconciliation et validation de données impliquant les données déterminées, la réconciliation étant conditionnée par une égalité au moins substantielle entre la somme des estimations du débit du fluide à fournir par le dispositif de chaque puits et l'estimation du débit cumulé à fournir par le séparateur de test — S20

## FIG. 1

$\alpha_1$

20

100% gaz

100% huile

100% eau
(eau salée)

$\alpha_2$

## FIG. 2

30

32

34

## FIG. 3

FIG. 4

FIG. 5

**EP 3 198 240 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007116008 A
- WO 2006048418 A
- US 6561041 B1